Europäisches Patentamt

European Patent Office

Office européen des brevets

(19)

(11) **EP 0 477 388 B1**

(12) **EUROPEAN PATENT SPECIFICATION**

(45) Date of publication and mention
of the grant of the patent:
**01.07.1998 Bulletin 1998/27**

(51) Int Cl.6: **G06T 1/60**, G06F 3/12,
G06F 9/06, G09G 5/24,
B41J 5/30

(21) Application number: **91908496.2**

(22) Date of filing: **17.04.1991**

(86) International application number:
**PCT/JP91/00500**

(87) International publication number:
**WO 91/16685 (31.10.1991 Gazette 1991/25)**

(54) **IMAGE PROCESSING APPARATUS**

BILDVERARBEITUNGSGERÄT

DISPOSITIF DE PRODUCTION D'IMAGE

(84) Designated Contracting States:
**DE FR GB**

(30) Priority: **17.04.1990 JP 101132/90**

(43) Date of publication of application:
**01.04.1992 Bulletin 1992/14**

(73) Proprietor: **SEIKO EPSON CORPORATION
Shinjuku-ku Tokyo 160 (JP)**

(72) Inventor: **MARUYAMA, Michio,
c/o Seiko Epson Corporation
Suwa-shi, Nagano 392 (JP)**

(74) Representative: **Liesegang, Roland, Dr.-Ing.
FORRESTER & BOEHMERT
Franz-Joseph-Strasse 38
80801 München (DE)**

(56) References cited:
JP-A- 1 251 230      JP-A-58 160 981
JP-A-63 200 193      US-A- 4 783 761

• PATENT ABSTRACTS OF JAPAN vol. 12, no. 280
(P-739)2 August 1988 & JP-A-63 058 536

## Description

This invention relates to an image forming apparatus for use in a page printer.

JP-A-63 058 536 discloses a microcomputer system which has stored an operating kernel in a ROM and additional routines in further ROMs, one of which being selectable by a switch.

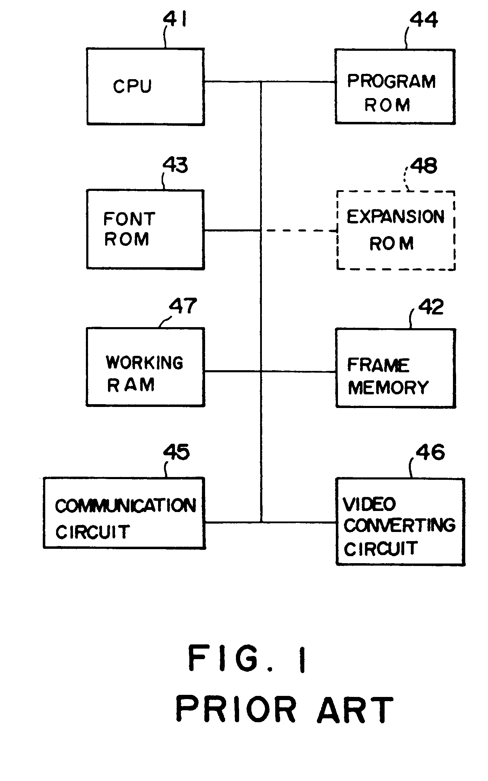

A prior art picture image forming apparatus for use in a page printer is shown in a block diagram in Fig. 1. As shown, the prior art picture image forming apparatus for use in a printer comprises a central processing unit (CPU) 41, a working memory (RAM) 47 for CPU 41, a memory (frame memory) 42 storing a picture image, a memory (font ROM) 43 storing data of characters, a memory (program ROM) 44 storing instructions to the CPU, a communication circuit 45 for controlling communication with external devices, not shown, and a video converting circuit 46 for sending the picture image data in the frame memory 42 to the character printing member of the printer. Reference numeral 48 represents an expanding ROM. When the character code sent from the communication circuit 45 is recognized, the CPU 41 searches out the picture image data of a character corresponding to that code from the font ROM. The picture image data is then transferred to the frame memory 42 from font ROM 43. This operation is repeated by the number of characters contained in one page, whereby the frame memory 42 stores a picture image data to be printed. Finally the picture image data in the frame memory 42 is sent to a printing mechanism, not shown, of the printer through video converting circuit 46 so that the picture image data are printed on a sheet of paper.

All processings described above are performed by CPU 41 executing the instructions stored in the program ROM 44. As a consequence, when the content of the program ROM 44 is changed the realizable function of the printer can be changed. Prior to this invention, a program ROM has been used wherein the stored content can not be changed readily.

There are several different types of code systems of data sent to the printer so that the method of processing the data differs corresponding to the code system. As above described, the prior art printer utilizes a program ROM whose content can not be changed readily. Consequently in the prior art apparatus, for the purpose of selectively adopting any one of many different processing methods, processing methods different from that in the program ROM 44 are stored in expansion ROM 48.

This prior art method has the following disadvantages. When a second processing method is selected, in addition to the ROM corresponding to the second method, it is necessary to provide a surplus program ROM corresponding to a first processing method which is not used. In other words, memory devices become redundant.

## SUMMARY OF THE INVENTION

According to this invention, in order to solve the above-mentioned problem, there is provided an image forming apparatus according to claim 1.

## BRIEF DESCRIPTION OF THE DRAWINGS

In the accompanying drawings:

Fig. 1 is a block diagram showing a prior art apparatus;
Fig. 2 is a block diagram showing the outline of the construction of one embodiment of this invention;
Fig. 3 is a chart showing the construction of the font and program ROMs shown in Fig. 1;
Fig. 4 is a chart showing the construction of the operation RAM 47 shown in Fig. 1;
Fig. 5 is a block diagram showing the functions of the CPU shown in Fig. 1;
Fig. 6 is a flow chart showing the processings of the CPU when a source switch is closed; and
Fig. 7 is a flow chart showing the processings of the CPU when the method of processing is charged.

## DESCRIPTION OF THE PREFERRED EMBODIMENT

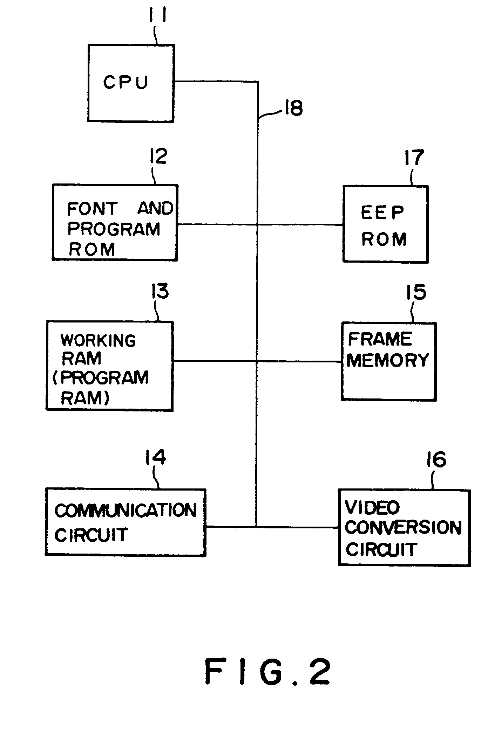

The outline of the construction of a preferred embodiment of this invention is shown in Fig. 2. The CPU 11 is connected to a font and program ROM 12, a working RAM 13, a communication circuit 14, a frame memory 15, a video converting circuit 16 and an EEPROM 17 via a bus line 18. Among these elements, as the communication circuit 14 and video converting circuit 16 may be used elements similar to those used in the prior art. However, a prior art expansion ROM 48 is not employed.

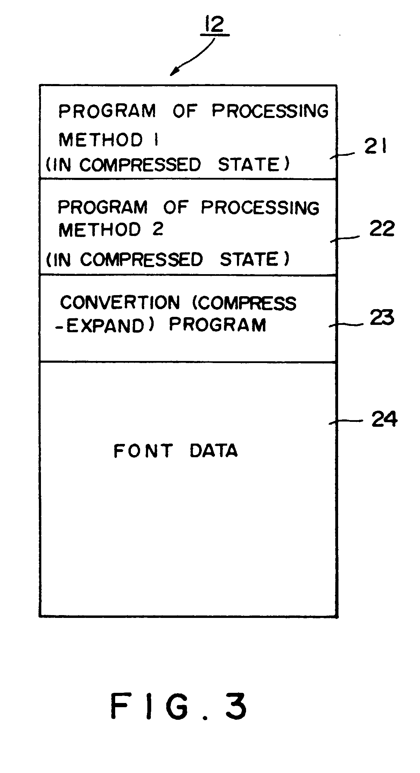

In the font and program ROM 12 are stored not only font data of characters but also small size programs obtained by compressing programs describing several different processing methods corresponding to several different code systems, respectively, and a converting program for expanding the compressed programs to the original programs. The chart shown in Fig. 3 shows the construction of the font and program ROM 12. An area 21 shown in Fig. 3 stores a compressed program of the processing method 1, an area 22 stores a compressed program of the processing method 2, area 23 stores a converting program for expanding the compressed programs, and area 24 stores font data.

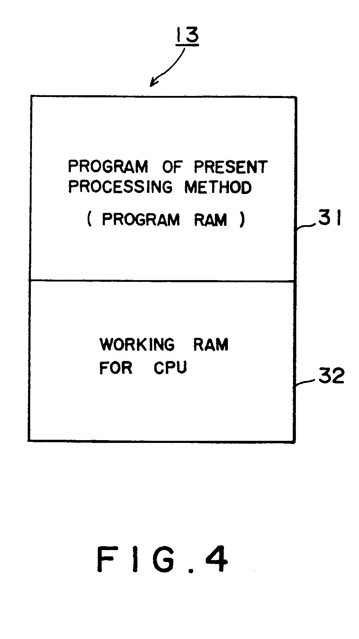

A portion of the working RAM 13 acts as a program RAM into which the processing program in the original state obtained by expanding the compressed program is written and in which the original processing program is executed. Fig. 4 is a chart showing the construction of the working RAM 13. Area 31 represents a program RAM storing the program of a data processing method obtained by expansion, whereas area 32 is used as a working RAM for the CPU.

The EEPROM 17 stores an identification code representing the method of processing now being used.

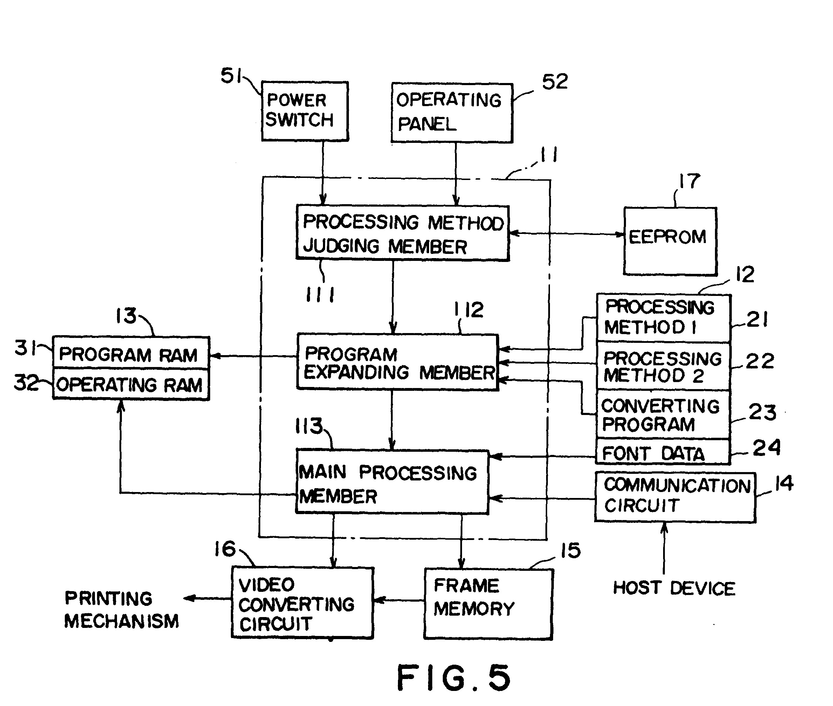

Fig. 5 shows the construction and performance of CPU 11 which includes a processing method judging member 111, a program expanding member 112 and a main processing member 113.

The processing method judging member 111 accesses to the EEPROM 17 when the power switch of the printer 51 is turned on and when a predetermined operation for changing the processing method is made in the operating panel 52. When the power switch is turned on the processing method judging member 111 reads out an identification code from EEPROM 17 so as to judge that what processing method is now being used. When the processing method is changed by the operation in the operating panel 52, the processing method judging member 111 changes the identification code stored in the EEPROM 17 to a code designating another processing method.

The processing method judging member 111 informs the processing method which has been judged or changed in a manner described above to the program expanding member 112 which reads the compressed program of the informed method of processing from the font and program ROM 12 and then expands the compressed program to the original state according to a conversion program and then writes the expanded program into a program RAM area 31 of RAM 13.

Upon completion of the writing the expanded processing program into RAM 13, the program expanding member 112 informs to the main processing member 113 that the writing has completed. In response to this information, the main processing member 113 comes into a state in which it can receive the printing data sent from the host device via the communication circuit 14. Under this condition, when a printing data is sent from the host device, the main processing member 113 prepares the picture image data according to the processing program in the program RAM area 31 of RAM 13 and then writes the picture image data into the frame memory 15. Concurrently therewith, the main processing member 113 controls the video converting circuit 16 for transferring the picture image data in the frame memory 15 to the printing mechanism so as to effect printing.

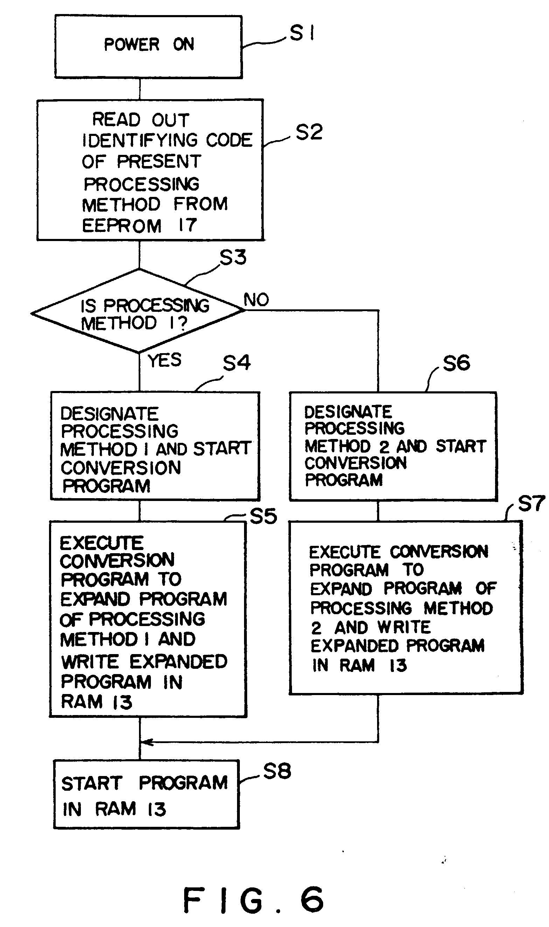

Fig. 6 shows a flow chart showing the sequence of operations executed by CPU 11 at turning on of the power switch. When the power switch is turned on, at steps S1 and S2, an identification code showing the present processing method is read out from EEPROM 17 and supplied to CPU 11 so as to judge the present processing method, at step S3. When the present processing method is judged, at steps S4 and S6, the present processing method is designated and the converted program is started; whereby the converted program is executed. As a consequence, the compressed program of the present processing method is read out from the font and program ROM 12 and then expanded to the original program. The original processing program thus obtained is written into the program RAM area 31 of the working RAM 13 at steps S5 and S8. After completing the writing of all processing programs into RAM area 31, the processing program in RAM 13 is started at step S8.

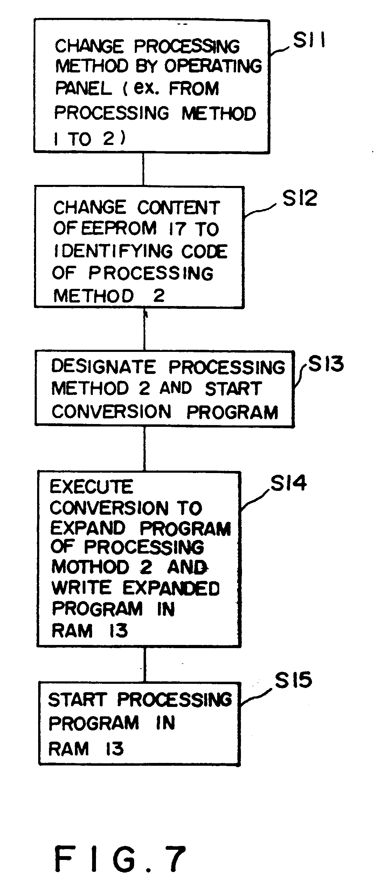

Fig. 7 is a flow chart showing the sequence of operations of the CPU 11 when a request for changing the method of processing is applied to the CPU 11 by the operation in the operating panel after the printer has begun its operation by the power-on. For example, when a request is issued for changing the processing method from 1 to 2, the CPU 11 changes already written identification code of the processing method 1 in the EEPROM 17 to that of the processing method 2, and then designates the processing method 2 and start the exchange program, at steps S11-S13. Accordingly, a compressed program of the processing method 2 is read out from the ROM 12 and is then expanded and written into the operating RAM 13 at step S14. After completion of this writing, the program of the processing method 2 in RAM 13 is started at step S15.

As above described, according to this invention the quantity of memory corresponding to the prior art program ROM and the expanding ROM can be reduced. Assuming that the reduction efficiency caused by the compression of the program is 70% and that the number of processing methods is two, the following equation holds:

$$2 - (2 \times 0.7) = 0.6$$

This equation means that the quantity of the memory can be reduced by 30%. Generally stating, in many cases, the size of the program of a page printer amounts to several mega bytes. According to this invention it is possible to reduce several hundreds kilo bytes.

It should be understood that the invention is not limited to the embodiment described above and that various changes and modifications can be made without departing from the scope of this invention as defined in the claims.

## Claims

1.  An image forming apparatus comprising:

    a central processing unit (11) for executing a program processing font data for forming an image;
    compressed program memory means (12) storing a plurality of compressed programs obtained by respectively compressing a plurality of original programs representing image processing methods of various types, said compressed program memory means (12) being a read only memory;

expanded program memory means (13);
selecting means (17, 111) for selecting a single image processing method out of said plurality of processing methods; and
expanding means for reading out a compressed program corresponding to said selected image processing method, then expanding said compressed program thereby obtaining an expanded program corresponding to the original program, and storing said expanded program into said expanded program memory means (13);
said central processing unit being arranged for accessing and executing said expanded program for forming an image.

2. The apparatus according to claim 1 which further comprises conversion program memory means (23) storing a conversion program representing a method of expanding said compressed program into said expanded program;
said expanding means executing said conversion program for effecting said expanding.

3. The apparatus according to claim 2 wherein said expanding means is included in said central processing unit.

4. The apparatus according to claim 2 or 3 wherein said conversion program memory means is included in said read only memory.

5. The apparatus according to claim 1 which further comprises non-volatile identification information memory means (17) for storing an identification information representing either one of said plurality of image processing methods;
said selecting means selecting one of said processing methods represented by said identifying information stored in said identifying information memory means when a power switch of said image processing apparatus is turned on.

6. The apparatus according to claim 5 further comprising input means for inputting a request for changing said selected image processing method,
said selecting means changing said identifiying information in said identifying information memory means and selecting one processing method corresponding to said changed identifying information.

**Patentansprüche**

1. Bilderzeugungsvorrichtung mit:

einer zentralen Verarbeitungseinheit (11) zum Ausführen eines Programmes, welches Schrifttypendaten zum Erzeugen eines Bildes verarbeitet;
einem Speichermittel (12) für komprimierte Programme, welches eine Vielzahl komprimierter Programme speichert, die durch jeweiliges Komprimieren einer Vielzahl von Originalprogrammen erhalten werden, welche verschiedene Arten von Bild-Verarbeitungs-Verfahren repräsentieren, wobei das Speichermittel (12) für komprimierte Programme ein Nurlesespeicher ist;
einem Speichermittel (13) für expandierte Programme;
Auswahlmitteln (17, 111) zum Auswählen eines einzigen Bild-Verarbeitungs-Verfahrens aus der Vielzahl von Verarbeitungs-Verfahren; und
Expandiermitteln zum Auslesen eines komprimierten Programmes, welches dem ausgewählten Bild-Verarbeitungs-Verfahren entspricht, zum anschließenden Expandieren des komprimierten Programmes und hierdurch zum Erhalten eines expandierten Programmes, welches dem Originalprogramm entspricht, und zum Speichern des expandierten Programmes in dem Speichermittel (13) für expandierte Programme;
wobei die zentrale Verarbeitungseinheit für das Zugreifen und das Ausführen des expandierten Programmes zum Erzeugen eines Bildes eingerichtet ist.

2. Vorrichtung nach Anspruch 1, die weiterhin Speichermittel (23) für ein Konvertierprogramm aufweist, welche ein Konvertierprogramm speichern, das ein Verfahren zum Expandieren des komprimierten Programmes in das expandierte Programm darstellt;
wobei die Expandiermittel das Konvertierprogramm ausführen, um das Expandieren zu bewirken.

3. Vorrichtung nach Anspruch 2, bei der die Expandiermittel in der zentralen Verarbeitungseinheit enthalten sind.

4. Vorrichtung nach Anspruch 2 oder 3, bei der die Speichermittel für das Konvertierprogramm in dem Nurlesespeicher enthalten sind.

5. Vorrichtung nach Anspruch 1, welche weiterhin nichtflüchtige Speichermittel (17) für Identifikationsinformation aufweist, um Identifikationsinformation zu speichern, die ein beliebiges der Vielzahl von Bild-Verarbeitungs-Verfahren darstellt;
wobei die Auswahlmittel eines der Verarbeitungsverfahren auswählen, das von der in den Speichermitteln für Identifikationsinformation gespeicherten Identifikationsinformation dargestellt wird, wenn ein Leistungsschalter des Bildverarbeitungsgerätes eingeschaltet wird.

6. Vorrichtung nach Anspruch 5, welche weiterhin Eingabemittel zum Eingeben einer Anforderung zum Wechsel des ausgewählten Bild-Verarbeitungs-Verfahrens aufweist,
wobei die Auswahlmittel die Identifikationsinformation in den Speichermitteln für Identifikationsinformation wechseln und ein Verarbeitungsverfahren auswählen, welches der gewechselten Identifikationsinformation entspricht.

## Revendications

1. Dispositif de production d'image comprenant :

une unité centrale (11) destinée à exécuter un programme de traitement de données de polices de caractères pour produire une image ;
des moyens formant mémoire de programmes compressés (12) mémorisant une pluralité de programmes compressés obtenus en compressant, respectivement, une pluralité de programmes originaux représentant des procédés de traitement d'image de divers types, lesdits moyens formant mémoire de programmes compressés (12) étant une mémoire morte ;
des moyens formant mémoire de programmes décompressés (13) ;
des moyens de sélection (17, 111) destinés à sélectionner un seul procédé de traitement d'image parmi ladite pluralité de procédés de traitement ; et
des moyens de décompression destinés à extraire un programme compressé correspondant audit procédé de traitement d'image sélectionné, à décompresser ensuite ledit programme compressé, obtenant de ce fait un programme décompressé correspondant au programme original, et à mémoriser ledit programme décompressé dans lesdits moyens formant mémoire de programmes décompressés (13) ;
ladite unité centrale étant agencée de manière à accéder audit programme décompressé et à l'exécuter pour produire une image.

2. Dispositif selon la revendication 1 comprenant, de plus, des moyens formant mémoire de programme de conversion (23) mémorisant un programme de conversion représentant un procédé de décompression dudit programme compressé dans ledit programme décompressé ;
lesdits moyens de décompression exécutant ledit programme de conversion pour effectuer ladite décompression.

3. Dispositif selon la revendication 2, dans lequel lesdits moyens de décompression sont compris dans ladite unité centrale.

4. Dispositif selon la revendication 2 ou 3, dans lequel lesdits moyens formant mémoire de programme de conversion sont compris dans ladite mémoire morte.

5. Dispositif selon la revendication 1 comprenant, de plus, des moyens formant mémoire d'informations d'identification non-volatile (17) destinés à mémoriser des informations d'identification représentant l'un ou l'autre de ladite pluralité de procédés de traitement d'image ;
lesdits moyens de sélection sélectionnant l'un desdits procédés de traitement représenté par lesdites informations d'identification mémorisées dans lesdits moyens formant mémoire d'informations d'identification lorsqu'un interrupteur de puissance dudit dispositif de traitement d'image est mis sur marche.

6. Dispositif selon la revendication 5 comprenant, de plus, des moyens d'entrée destinés à entrer une requête pour changer ledit procédé de traitement d'image sélectionné,
lesdits moyens de sélection changeant lesdites informations d'identification dans lesdits moyens formant mémoire d'informations d'identification et sélectionnant un procédé de traitement correspondant auxdites informations d'identification changées.

FIG. I
PRIOR ART

FIG. 2

<u>12</u>

| |
|---|
| PROGRAM OF PROCESSING METHOD 1 (IN COMPRESSED STATE) — 21 |
| PROGRAM OF PROCESSING METHOD 2 (IN COMPRESSED STATE) — 22 |
| CONVERTION (COMPRESS -EXPAND) PROGRAM — 23 |
| FONT DATA — 24 |

# F I G . 3

13

PROGRAM OF PRESENT
PROCESSING METHOD

( PROGRAM RAM )   31

WORKING RAM
FOR CPU   32

# FIG.4

FIG.5

```
                    ┌──────────────────┐
                    │   POWER  ON      │────S1
                    └──────────────────┘
                             │
                    ┌──────────────────┐
                    │   READ  OUT      │
                    │ IDENTIFYING CODE │────S2
                    │ OF  PRESENT      │
                    │ PROCESSING       │
                    │ METHOD  FROM     │
                    │ EEPROM  17       │
                    └──────────────────┘
                             │
                           S3
                        ╱╲
                     ╱        ╲
                  ╱ IS PROCESSING ╲  NO
                  ╲ METHOD 1?     ╱──────────────┐
                     ╲        ╱                  │
                        ╲╱                       │
                         │ YES   S4              │  S6
          ┌──────────────────┐         ┌──────────────────┐
          │ DESIGNATE        │         │ DESIGNATE        │
          │ PROCESSING       │         │ PROCESSING       │
          │ METHOD 1 AND START│        │ METHOD 2 AND START│
          │ CONVERSION       │         │ CONVERSION       │
          │ PROGRAM          │         │ PROGRAM          │
          └──────────────────┘         └──────────────────┘
                   │  S5                        │  S7
          ┌──────────────────┐         ┌──────────────────┐
          │ EXECUTE          │         │ EXECUTE CONVERSION│
          │ CONVERSION       │         │ PROGRAM  TO      │
          │ PROGRAM  TO      │         │ EXPAND PROGRAM OF │
          │ EXPAND PROGRAM   │         │ PROCESSING METHOD │
          │ OF PROCESSING    │         │ 2 AND WRITE      │
          │ METHOD 1 AND     │         │ EXPANDED PROGRAM │
          │ WRITE EXPANDED   │         │ IN RAM  13       │
          │ PROGRAM  IN      │         └──────────────────┘
          │ RAM  13          │                  │
          └──────────────────┘                  │
                   │◄───────────────────────────┘
          ┌──────────────────┐
          │ START  PROGRAM   │────S8
          │ IN  RAM  13      │
          └──────────────────┘
```

# F I G . 6

CHANGE PROCESSING
METHOD BY OPERATING
PANEL ( ex. FROM
PROCESSING METHOD
1 TO 2 ) _S11

CHANGE CONTENT
OF EEPROM 17 TO
IDENTIFYING CODE
OF PROCESSING
METHOD 2 _S12

DESIGNATE PROCESSING
METHOD 2 AND START
CONVERSION PROGRAM _S13

EXECUTE
CONVERSION TO
EXPAND PROGRAM
OF PROCESSING
MOTHOD 2 AND
WRITE EXPANDED
PROGRAM IN
RAM 13 _S14

START PROCESSING
PROGRAM IN
RAM 13 _S15

# F I G. 7